# EUROPEAN PATENT APPLICATION

(11) **EP 2 359 693 A2**
(43) Date of publication of application: **24.08.2011**
(21) Application number: 11155114.9
(22) Date of filing: 19.02.2011
(51) Int. Cl.: A01N 59/00, A01N 59/02, A01P 3/00, A01N 37/44, A01N 37/46, A01N 43/50, A01N 47/44, C05G 3/02, A01N 65/00

(54) **Composition for the care of plants**

(30) Priority: 19.02.2010 IT BO20100091
(71) Applicant: Socoa Agriconsult di Araldo Bugiani Ditta Individuale, 40139 Bologna (IT)
(72) Inventor: Bugiani, Araldo, 40138 Bologna (IT)
(74) Representative: Jorio, Paolo

(57) **Abstract**

There is disclosed the treatment of plant diseases by means of a composition comprising from 10 wt% to 55 wt%, with respect to the overall weight of the composition, of (elementary) sulphur; from 10 wt% to 35 wt%, with respect to the overall weight of the composition, of potassium bicarbonate; and from 10 wt% to 75 wt% with respect to the overall weight of the composition, of a mixture of amino acids and/or peptides; from the set of experimental tests performed, it is apparent that the various components of the composition have a significant and surprising synergical action.

## Description

### TECHNICAL FIELD

The present invention relates to a composition for the treatment of plant diseases and to uses of a composition (formulation). In particular, the present invention relates to a use of a composition as a fungicidal agent for pathogens and/or parasites of plants.

### BACKGROUND OF THE INVENTION

Elementary sulphur has been known for years to be a pivotal means for fighting some severe phytopaties caused by fungi and bacteria that damage many plants and the main farm crops. Sulphur is commonly used on its own or in a mixture with other products (copper or organic synthesis compounds) to fight especially different forms of powdery mildew (a mildew that damages vine and many other cultivated arboreal and herbaceous plants). However, although sulphur actually acts against different forms of powdery mildew (*Uncinula necator, Sphaeroteca pannosa* etc.), it has a very mild action against these diseases (therefore it must be used in high dosages) and an almost negligible action against other important fungal diseases caused by other pathogens, such as downy mildew (*Plasmopara viticola*), pear and apple scab (*Venturia Spp*) etc.

In recent years, with the development and the establishment of the so-called "Biological Agriculture" (that involves the elimination of organic synthesis products in the protection of farm crops), sulphur on its own and in a mixture with copper has remained among the few products available for the protection of plants for anyone running a low environmental impact agriculture. However, copper, as a metal, accumulates in the ground causing soil and aquifer pollution problems.

Therefore, some international authorities (for example the European Community) have set limits to the use of copper in agriculture.

Recently, new copper formulations have been studied and developed to reduce dosages, thus allowing to remain within the limit of 6 kg/Ha per year set by the European Community.

The need is felt to develop new products and new formulations which allow the use of sulphur neither in combination with copper (or with copper at a low concentration) nor in combination with other organic synthesis products, which however have a relevant broad range activity for the treatment of plant diseases.

WO2005028400 discloses a fertiliser comprising potassium and sulphur hydroxide.

EP0891711 discloses a composition for the treatment of plant diseases comprising potassium and sulphate.

It is an object of the present invention to provide a composition and uses of a composition, which allow to overcome at least partially the drawbacks of the state of the art and are at the same time easy and cost-effective to implement.

### SUMMARY

According to the present invention, there are provided a composition (formulation) and uses of a composition according to the following independent claims and, preferably, according to any of the claims directly or indirectly dependent on the independent claims.

In the present text by "treatment of" or "treating" a disease (for example due to a pathogenic agent or a parasite) or a fungus, there is intended the cure and/or the prophylaxis and/or the therapy of such a disease or fungus. By prophylaxis, there is advantageously intended to at least partially prevent the development of a potential disease and/or prevent the worsening of the symptoms and/or the progression of a disease. By therapy there is intended to partially or totally relieve the symptoms of a disease and/or reduce the extent of a disease.

In the present text by "care of" a plant there is intended an action performed on the plant to improve the condition of health and/or luxuriance.

### EMBODIMENTS OF THE INVENTION

In accordance with a first aspect of the present invention there is provided a composition comprising (elementary) sulphur and (salified or dissolved) potassium cation.

According to some embodiments, the composition comprises at least 6 wt% (in particular, at least 10 w%), with respect to the overall weight of the composition, of sulphur. In particular, the composition comprises up to 80 wt% (in particular up to 55 wt%), with respect to the overall weight of the composition, of sulphur. According to specific embodiments, the composition comprises at least 15 wt% (in particular, at least 20 wt%), with respect to the overall weight of the composition, of sulphur.

According to some embodiments, the composition comprises at least 3 wt% (in particular, 4 w%), with respect to the overall weight of the composition, of potassium cation. In particular, the composition comprises up to 50 wt% (more in particular up to 16 wt%), with respect to the overall weight of the composition, of potassium cation.

Advantageously, the sum of the weights of sulphur and of potassium cation forms at least 10 wt% (in particular at least 15 wt%) of the composition. According to some embodiments, the sum of the weights of the sulphur and of the potassium cation forms at least 20 wt% (in particular at least 25 wt%) of the composition.

According to some embodiments, the composition comprises at least 7 wt% (advantageously, at least 9 wt%), with respect to the overall weight of the composition, of the sum of (salified or dissolved) carbonate and bicarbonate anions. In particular, the composition comprises up to 42 wt% (more in particular up to 35 wt%), with respect to the overall weight of the composition, of the sum of (salified or dissolved) carbonate and bicarbonate anions.

According to specific embodiments, the composition comprises at least about 10 wt% (in particular, at least 15 wt%), with respect to the overall weight of the composition, of potassium bicarbonate. In particular, the composition comprises up to 45 wt% (more in particular up to 38 wt%), with respect to the overall weight of the composition, of potassium bicarbonate.

Advantageously, the composition comprises a mixture of amino acids and/or peptides. In other words, the composition comprises a mixture formed by components selected from the group consisting of: amino acids, peptides and a combination thereof.

According to some embodiments, the composition comprises at least 10 wt% (in particular, at least 12 wt%), with respect to the overall weight of the composition, of the mixture of amino acids and/or peptides.

According to some embodiments, the composition comprises up to 75 wt% (in particular, up to 65 wt%; more in particular up to 60 wt%), with respect to the overall weight of the composition, of the mixture of amino acids and/or peptides.

Advantageously, in the above mentioned mixture of amino acids and/or peptides, the peptides are so-called short chain peptides, i.e. chains up to twenty amino acids. In particular, the mixture of amino acids and/or peptides has approximately the following amino acid profile (g/90 g amino acids): alanine 7-12, arginine 1-6.5, aspartic acid 3-6, glutamic acid 8-12, glycine 20-26, hydroxypiroline 1.5-8, histidine 0.5-2, isoleucine 0.5-2, leucine 2-4, lysine 3-5, methionine 0.2-1.8, phenylalanine 1-3, proline 11-15, serine, 0.2-2.5, threonine 0.2-1.9, tyrosine 0.5-3, valine 1-3.5.

According to specific embodiments, the mixture of amino acids and/or peptides is Protifert P N14 of SICIT^{®} CHEMITECH (Via Arzignano, 80; 36072 Chiampo, Vicenza; Italy).

According to some embodiments, at least part of the mixture of amino acids and/or peptides is in the form of a potassium proteinate, i.e. a mixture of amino acids and/or peptides (in particular, short chain peptides) which are at least partially salified with potassium carbonate. In particular, at least some of the aminic moieties of the amino acids are salified as follows: NH₃⁺ CO₃²⁻ K⁺. Obviously, when the mixture is dissolved in water the above mentioned salts (and thus the ions therein) are solvated.

More in particular, the potassium proteinate comprises from 20 wt% to 30 wt%, with respect to the overall weight of the proteinate, of the mixture of amino acids and/or peptides.

According to some embodiments, at least part of the mixture of amino acids and/or peptides is in the form of a sulphur proteinate, i.e. a mixture of amino acids, peptides (in particular, short chain peptides) and elementary (sulphur). In particular, the sulphur proteinate comprises from 15 wt% to 30 wt%, with respect to the overall weight of the proteinate, of the mixture of amino acids and/or peptides and from 30 wt% to 35 wt%, with respect to the overall weight of the proteinate, of the sulphur.

Advantageously, the composition comprises an extract of *Ascophyllum nodosum.* This extract is adapted to further reduce the toxicity of the composition for the plants. According to specific embodiments, Ascofil is used, which is a dehydrated extract of *Ascophyllum nodosum,* and in particular Acadian^{®} Powder of Acadian Seaplants Limited (Dartmouth, Nova Scotia, Canada).

According to some embodiments, the composition comprises at least 3 wt% (in particular, at least 5 wt%), with respect to the overall weight of the composition, of the extract of *Ascophyllum nodosum.* According to some embodiments, the composition comprises at least 20 wt% (in particular, up to 15 wt%), with respect to the overall weight of the composition, of the extract of *Ascophyllum nodosum.*

Advantageously, the composition comprises Glutathione, which serves as an antioxidant. According to specific embodiments, GLUTATIONE TEC of Grab Chemical (Via Ruffini, 22 - Cremona, Italy) is used.

According to some embodiments, the composition comprises at least 3 wt% (in particular, at least 5 wt%; more in particular, at least 7 wt%), with respect to the overall weight of the composition, of Gluthatione. According to some embodiments, the composition comprises up to 30 wt% (in particular, up to 20 wt%), with respect to the overall weight of the composition, of Gluthatione.

According to alternative embodiments, the composition may be in a substantially solid form (for example in the form of powder and/or in a granular form) or in a substantially liquid form.

When the composition is substantially solid, normally, the composition is dissolved in water before use so that the sulphur remains suspended and the potassium cation and/or the carbonate/bicarbonate anion (in particular, potassium bicarbonate) are solvated.

According to some embodiments, when the composition is substantially solid, the composition comprises from 30 wt% (in particular from 40 wt%) to 55 wt% (in particular, to 50 wt%), with respect to the overall weight of the composition, of sulphur.

According to some embodiments, when the composition is substantially solid, the composition comprises at least 10 wt% (in particular, at least 15 wt%), with respect to the overall weight of the composition, of potassium cation. The composition comprises up to 35 wt% (in particular up to 20 wt%), with respect to the overall weight of the composition, of potassium cation.

According to some embodiments, when the composition is substantially solid, the composition comprises at least 15 wt% (in particular, at least 20 wt%), with respect to the overall weight of the composition, of the sum of carbonate and bicarbonate anions. The composition comprises up to 42 wt% (in particular up to 30 wt%), with respect to the overall weight of the composition, of the sum of the carbonate and bicarbonate anions.

According to some embodiments, when the composition is substantially solid, the composition comprises at least 10 wt% (in particular, at least 15 wt%), with respect to the overall weight of the composition, of the mixture of amino acids and/or peptides. The composition comprises up to 30 wt% (in particular, up to 25 wt%) with respect to the overall weight of the composition, of the mixture of amino acids and/or peptides.

Advantageously, when the composition is in the substantially liquid form, the composition comprises water (in particular, from 2 wt% to 40 wt%, with respect to the overall weight of the composition).

According to some embodiments, when the composition is in the substantially liquid form, the composition comprises from 45 wt% (in particular from 40 wt%) to 65 wt% (in particular, to 61 wt%), with respect to the overall weight of the composition, of sulphur proteinate.

According to some embodiments, when the composition is in the substantially liquid form, the composition comprises from 25 wt% (in particular from 30 wt%) to 45 wt% (in particular, to 40 wt%), with respect to the overall weight of the composition, of potassium proteinate.

According to a second aspect of the present invention, a composition comprising elementary (sulphur) and carbonate and/or bicarbonate ions is provided.

In particular, the composition comprises sulphur and carbonate and bicarbonate ions in the amounts indicated according to the first aspect of the invention. According to some embodiments, the composition comprises one or more further components of the composition according to the first aspect of the present invention. Advantageously, the composition comprises these one or more components in the amounts indicated according to the first aspect of the present invention.

According to a third aspect of the present invention, a composition comprising elementary (sulphur) and a mixture of amino acids and/or peptides is provided. The mixture of amino acids and/or peptides is defined as indicated according to the first aspect of the present invention.

In particular, the composition comprises sulphur and the mixture of amino acids and/or peptides in the amounts indicated according to the first aspect of the invention. According to some embodiments, the composition comprises one or more further components of the composition according to the first aspect of the present invention. Advantageously, the composition comprises these one or more components in the amounts indicated according to the first aspect of the present invention.

According to a fourth aspect of the present invention there is provided the use of a composition according to one of the previous aspects of the present invention for the care of plants.

In particular, the composition is used to treat a plant disease.

More in particular, the composition is used as a fungicidal agent for plant pathogens and/or parasites.

According to some embodiments, there is provided a use of the composition for the treatment of a fungus of a genus selected from the group consisting of: *Phytophtora, Uncinula, Venturia, Plasmopara.*

According to some embodiments, there is provided a use of the composition for the treatment of a fungus selected from the group consisting of: *Phytophtora infestans, Uncinula necator, Venturia inaequalis, Plasmopara viticola.*

Advantageously, during use, the plants are wetted by means of the composition (or an aqueous solution thereof). In particular, the plants are wetted until they drip. More in particular, the plants are wetted every 5 to 15 days.

According to some embodiments, the composition is according to the first aspect of the present invention.

According to some embodiments, the composition is according to the second aspect of the present invention.

According to some embodiments, the composition is according to the third aspect of the present invention.

It should be noted that the compositions according to the present invention have shown a surprising synergical effect that allows the sulphur to act very strongly.

Further features of the present invention will result from the following disclosure of some embodiments of the composition given by mere way of non-limitative illustration.

### Example 1

Ten formulations have been prepared by mixing according to the following compositions:

| Formulation 1 (wettable powder) | | | |
|---|---|---|---|
| Composition | | **S** | **K** |
| Sulphur 90 | 45% | 40% | |
| Potassium bicarbonate | 30% | | 11.7% |
| Protifert | 15% | | |
| Ascofil | 10% | | 1.7% |

| Formulation 2 (wettable powder) | | | |
|---|---|---|---|
| Composition | | **S** | **K** |
| Sulphur 90 | 50% | 45% | |
| Potassium bicarbonate | 30% | | 11.7% |
| Protifert | 20% | | |

| Formulation 3 (fluid paste) | | | |
|---|---|---|---|
| Composition | | **S** | **K** |
| Sulphur proteinate (33%S) | 40% | 13% | |
| Potassium proteinate (16%K) | 40% | | 6.4% |
| Glutathione (8%K) | 10% | | 0.8% |
| Ascofil (17%K) | 5% | | 0.8% |
| Water | 5% | | |

| Formulation 4 (fluid paste) | | | |
|---|---|---|---|
| Composition | | **S** | **K** |
| Sulphur 90 | 15% | 13% | |
| Potassium bicarbonate | 20% | | 7.8% |
| Protifert | 30% | | |
| Gluthatione | 10% | | 0.8% |
| Ascofil | 5% | | 0.8% |
| Water | 20% | | |

| Formulation 5 (fluid paste) | | | |
|---|---|---|---|
| Composition | | **S** | **K** |
| Sulphur proteinate (33%S) | 50% | 16% | |
| Potassium proteinate (16%K) | 30% | | 4.8% |
| Glutathione (8%K) | 10% | | 0.8% |
| Ascofil (17%K) | 5% | | 0.8% |
| Water | 5% | | |

| Formulation 6 (fluid paste) | | | |
|---|---|---|---|
| Composition | | **S** | **K** |
| Sulphur 90 | 18% | 16% | |
| Potassium bicarbonate | 12% | | 4.6% |
| Protifert | 30% | | |
| Gluthatione | 10% | | 1.7% |
| Ascofil | 5% | | 0.8% |
| Water | 20% | | |

| Formulation 7 (fluid paste) | | | |
|---|---|---|---|
| Composition | | **S** | **K** |
| Sulphur proteinate (33%S) | 61% | 20% | |
| Potassium proteinate | 39% | | 6.2% |
| (16%K) | | | |

| Formulation 8 (fluid paste) | | | |
|---|---|---|---|
| Composition | | **S** | **K** |
| Sulphur 90 | 23% | 20% | |
| Potassium bicarbonate | 16% | | 6.2% |
| Protifert | 30% | | |
| Water | 31% | | |

| Formulation 9 (fluid paste) | | | |
|---|---|---|---|
| Composition | | **S** | **K** |
| Sulphur 90 | 34% | 30% | |
| Potassium bicarbonate | 30% | | 11.7% |
| Gluthatione | 26% | | 2.1% |
| Water | 10% | | |

| Formulation 10 (fluid paste) | | | |
|---|---|---|---|
| Composition | | **S** | **K** |
| Sulphur 90 | 34% | 30% | |
| Potassium bicarbonate | 30% | | 11.7% |
| Protifert | 16% | | |
| Water | 20% | | |

In the above discloses mixtures, the percentages are percentages in weight referred to the overall weight of the formulation.

Protifert is Protifert P N14 of SICIT^{®} CHEMITECH (Via Arzignano, 80; 36072 Chiampo, Vicenza; Italy) is a mixture of amino acids and/or peptides (in particular, chains up to twenty amino acids) and has approximately the following amino acid profile (g/87.5 g amino acids): alanine 8.0, arginine 5.6, aspartic acid 4.9, glutamic acid 9.2, glycine 22.0, hydroxypiroline 7.3, histidine 1.1, isoleucine 1.3, leucine 3.1, lysine 3.8, methionine 0.7, phenylalanine 2.0, proline 12.1, serine 1.5, treonine 0.9, tyrosine 1.1, valine 2.3.

Ascofil is a dehydrated extract of *Ascophyllum nodosum* and is in particular Acadian^{®} Powder of Acadian Seaplants Limited (Dartmouth, Nova Scotia, Canada).

GLUTATIONE TEC of Grab Chemical (Via Ruffini, 22 - Cremona, Italy) has been used as Gluthatione. This product contains about 8 wt% K₂O.

The potassium (K) proteinate is a mixture of amino acids and/or peptides (in particular up to 20 amino acids) which are salified with potassium and contain potassium carbonate. In particular the potassium proteinate is NK 4-16 of SICIT^{®} CHEMITECH, contains 16 wt% of K₂O and has approximately the following amino acid profile (% wt/wt): alanine 2.8, arginine 0.4, aspartic acid 1.2, glutamic acid 2.6, glycine 6.4, hydroxylisine 0.5, hydroxypiroline 2.2, histidine 0.2, isoleucine 0.4, leucine 0.8, lysine 0.8, methionine 0.2, ornithine 1.2, phenylalanine 0.6, proline 3.5, serine 0.1, treonine 0.2, tyrosine 0.6, valine 0.7.

The sulphur (S) proteinate is a mixture of amino acids and/or peptides (in particular up to 20 amino acids) containing (elementary) sulphur. In particular the sulphur proteinate is N-S 3.5-33 of SICIT^{®} CHEMITECH, contains 33 wt% of S and has approximately the following amino acid profile (g/100g): alanine 2.3, arginine 0.2, aspartic acid 0.7, glutamic acid 2.2, glycine 4.4, hydroxylisine 0.9, hydroxypiroline 1.4, histidine 0.2, isoleucine 0.4, leucine 0.8, lysine 0.8, methionine 0.3, ornithine 1.1, phenylalanine 0.5, proline 2.8, serine 0.1, treonine 0.2, tyrosine 0.5, valine 0.7.

Zolvis 90 of Terranalisi^{®} Srl was used as sulphur (90 wt% pure).

Potassium bicarbonate dl 99.5 wt% of Polichimica^{®} Srl was used as potassium bicarbonate.

In the following examples, the following were used as copper containing products: Ossiclor 50 (copper oxychloride - Cu₃Cl₂(OH)₄ - 50 wt% of Manica® Spa; Curenox 40% (copper oxychloride 40 wt% of I.Q.V. Italia^{®} Spa).

### Example 2

Tests to verify the activity against late blight (*Phytophthora infestans*) and the possible phytotoxicity of some of the above disclosed compositions are shown in this example.

### Materials and methods

The tests were performed in a greenhouse at a temperature of 20-25 °C and relative humidity of 50-80% and under natural light, using tomato plants cultivated in a pot, at the phenological stage of 5-6 leaf trusses (Marmande variety).

The disease was artificially inoculated after the treatment, by spraying an aqueous suspension of sporangii of *Phytophthora infestans* (45000/ml) on the plants and maintaining the plants in a moist chamber for about 24 hours.

Experimental scheme: four repetitions, each of which was represented by a pot with a plant.

Treatments: a single treatment performed by manually spraying, wetting the vegetation until it drips, preventively at different times before inoculation. The solutions for the treatment were provided by diluting (dissolving) some of the mixtures of example 1 and some other products according to the proportions disclosed hereinafter:
Formulation 2: 500 g in 1 hl of water
Formulation 1: 500 g in 1 hl of water
Formulation 4: 600 g in 1 hl of water
Formulation 3: 600 g in 1 hl of water
Formulation 5: 600 g in 1 hl of water
Tiovit^{®} (Syngenta): 500 g in 1 hl of water Potassium bicarbonate: 200 g in 1 hl of water
Tiovit^{®} is a preparation containing 80 wt% of sulphur.
Measurements: evaluation at subsequent times after the onset of symptoms on untreated plants of the % of leaf surface affected by the disease on each truss.
Statistical processing: analysis of the variance and comparison between the averages with the Duncan test (p = 0.05).

### Results

The results for the treatments two hours before the inoculation of *Phytophthora infestans* are shown in table 1 hereinafter:

**Table 1**

| Product | S content (g/hl) | % of leaf surface affected after days from inoculation | | |
|---|---|---|---|---|
| | | **3 days** | **4 days** | **6 days** |
| Untreated | | 60 a | 100 a | 100 a |
| Tiovit | 400 | 5.5 ef | 50 e | 65 d |
| Formulation 2 | 225 | 0 g | 2 g | 15 g |
| Formulation 1 | 200 | 10 de | 22.5 ef | 40 fg |
| Formulation 4 | 78 | 5.0 g | 60 g | 83 g |
| Formulation 3 | 78 | 4.3 f | 50 c | 70 cd |
| Formulation 5 | 96 | 0.0 g | 1.5 g | 15 g |
| Potassium bicarbonate | | 60 a | 100 a | 100 a |

The results for the treatments 48 hours before the inoculation of *Phytophthora infestans* are shown in table 2 hereinafter:

**Table 2**

| Product | S content (g/hl) | % of leaf surface affected after days from inoculation | | |
|---|---|---|---|---|
| | | **3 days** | **4 days** | **6 days** |
| Untreated | | 77.5 a | 100 g | 100 a |
| Tiovit | 400 | 8 a | 67.5 d | 100 a |
| Formulation 2 | 225 | 0.5 g | 3.2 i | 17.5 f |
| Formulation 1 | 200 | 12.5 de | 27 g | 52 d |
| Formulation 4 | 78 | 10 gde | 19 h | 68 c |
| Formulation 3 | 78 | 5 f | 60 ef | 83 b |
| Formulation 5 | 96 | 0 g | 2 i | 16 f |
| Potassium bicarbonate | | 60 | 100 | 100 |

In the tables (shown above and hereinafter) "untreated" indicates untreated tomato plants. In each of the tables (shown above and hereinafter) the results identified by the same letters are not distinguishable statistically. For example, in table 2, the results obtained for formulation 5 after 6 days are not statistically distinguishable from the results obtained for formulation 2 again after 6 days. In the tables disclosed above and hereinafter, the S content indicates the amount in grams of elementary sulphur per hectolitre of product already diluted in water according to the proportions shown.

From the behaviour of Tiovit it may be noted that sulphur on its own has a relevant effectiveness in a greenhouse in counteracting tomato blight even though in the measurements following the first one there is a sudden decay of the activity of the product.

Instead, potassium bicarbonate results substantially ineffective.

On the basis of these observations the activities of mixtures 1-5 result absolutely surprising. The activities of these mixtures are considerably higher (or at least comparable) to that of Tiovit although they contain a considerably lower amount of sulphur.

### Example 3

This example discloses the measurements to verify the activity against apple scab (*Venturia inaequalis*).

### Materials and methods

The tests were performed in a conditioned cell at a temperature of 20°C and relative humidity of 50-80% with timed light (12 hours of light and 12 hours of darkness), using Golden variety apple trees obtained from a seed, at the phenological stage of 5-6 developed leaves cultivated in a pot.

The disease was artificially inoculated by spraying on the plants an aqueous suspension of conidia of *Venturia inaequalis* (80000/ml) and maintaining the same in a moist chamber for about 48 hours.

### Experimental scheme:

Five repetitions were performed, each of which was represented by a pot with a plant.

### Treatments:

The treatments were performed with a manual sprayer, wetting the vegetation (the different products have been diluted in water according to ratios indicated in the second column of table 3 - for example 600 g of ossiclor 50 were diluted in hl of water) until it drips, preventively at different times before inoculation; for each test only one treatment was carried out.

### Measurements:

An evaluation was performed at subsequent moments in time after the occurrence of the symptoms on the untreated plants of the % of the leaf surface affected by the disease on the last three open leaves at the moment of the treatment.

Statistical processing: analysis of the variance and comparison between the averages with the Duncan test (p = 0.05).

### Results

The results of the different tests performed are shown in tables 3 (activity of the products with the preventive treatment performed 24 hours before inoculation) and 4 (activity of the products with the preventive treatment performed 48 hours before inoculation).

**Table 3**

| Product | Formulation dose (g/hl) | S content (g/hl) | content (g/hl) | of leaf surface affected after days from inoculation | |
|---|---|---|---|---|---|
| | | | | **14 days** | **19 days** |
| Untreated | | | | 85 a | defoliated |
| Ossiclor 50 | 600 | 0 | 300 | 50 c | 75 |
| Formulation 2 | 600 | 270 | 0 | 7 d | 17.8 |
| Formulation 5 | 600 | 96 | 0 | 5 d | 20 |

**Table 4**

| Product | Formulati on dose (g/hl) | S content (g/hl) | Cu content (g/hl) | % of leaf surface affected after days from inoculation | |
|---|---|---|---|---|---|
| | | | | **16 days** | **21 days** |
| Untreated | | | | 65 a | 80 a |
| Ossiclor 50 | 600 | 0 | 300 | 37.5 b | 57.5 b |
| Formulation 2 | 600 | 270 | 0 | 5 c | 24.5 c |
| Formulation 5 | 600 | 96 | 0 | 7 c | 22.7 c |

Both formulations 2 and 5 have shown a considerable activity. This activity is also higher than that of copper oxychloride (Ossiclor 50).

### Example 4

This example discloses tests to verify the activities against powdery mildew (*Uncinula necator*).

### Locality

Town of Borghi (FC - Italy), hilly area, specialised wine-producing farm, located in a pedoclimatic environment which promotes in particular the attacks of powdery mildew, which normally occur from blossoming-setting, without being preceded by primary attack symptoms on the buds from gemmation overwinter, and therefore are caused by ascospores.

### Materials and methods

Test performed on cv vines 7 year old Bianchello Double arched cane system, plant density 3 x 1.2 m.

### Experimental scheme:

"Random blocks" with three repetitions and batches formed by 7-8 adjacent vines on the row.

### Treatments:

The treatments were performed with a motorpump provided with hand-held spraying nozzle, by wetting the plants until they drip (the different products are diluted in water according to the ratios indicated in the second column of table 5). The same were started on 26 May 2009, when the vines were at a phenological stage of full flowering and prosecuted every ten days up to the stage of bunch closing.

Distributed volume: variable between 10 and 14 hl/ha (hectolitres/hectare) depending on the vegetative development.

The dates of treatment were 26.06.2009, 03.06.2009, 12.06.2009, 23.06.2009.

### Measurements:

An evaluation of the extent of the attack about 3 weeks after the last treatment (16 July) was performed with the control of the grape affected on most of the bunches of each batch.

A traditional meteorological hut, provided with mechanical thermohygrograph and pluviograph was used for the detection of the climatic data.

### Results

The averages of the results of the different tests which were carried out are shown in table 5.

**Table 5**

| Product | Formulation dose (g/hl) | S content (g/hl) | % of affected bunches | % of affected grapes |
|---|---|---|---|---|
| | | | Average | Average |
| Untreated | | | 90.00 | 22.06 a |
| Tiovit | 300 | 240 | 66.01 | 4.98 b |
| Formulation 1 | 500 | 206 | 48.08 | 1.68 b |
| Formulation 5 | 800 | 128 | 61.39 | 4.64 b |

In the tables, "untreated" indicates the vine plants which were not treated in any way; by "formulation dose" there is intended the grams of product per hectolitres of water. The content of S (g/hl) indicates the amounts of elementary sulphur in grams per hectolitre.

On the basis of the data shown above, the activities of mixtures 1 and 5 result absolutely surprising. The activities of these mixtures are radically higher (or at least comparable) to that of Tiovit although they contain a considerably lower amount of sulphur.

### Example 5

This example discloses the tests to confirm the activity against downy mildew (*Plasmopara viticola*) in open field.

### Locality

Altedo (Bologna, Italy) - Experimental farm of the University of Bologna

### Materials and methods

The test was performed in open field on 24 year old Tocai cv vines, with a plant density of 3 x 1.5 m. spurred-cordon system.

### Experimental scheme:

"Random blocks" with four repetitions and batches of 6 adjacent vines on the row (segments between two poles).

### Treatments:

The treatments were performed with a motorpump provided with a single hand-held spraying nozzle, by wetting the plants until they drip (the different products are diluted in water according to the ratios indicated in the second column of table 6). The treatments were started on 12 May and prosecuted every week until the end of June (year 2009).

### Measurements:

The measurements were performed on the 7-8 of July and provide: visual evaluation for the batches of the percentage of leaf surface affected by the symptoms of the disease; evaluation on most of the bunches of the percentage of grapes affected by the mildew.

### Statistical processing of the data

Analysis of the variance and comparison between the averages with the Duncan test (p = 0.05).
a traditional meteorological hut, provided with mechanical thermohygrograph and pluviograph was used for the detection of the climatic data.

**Table 6**

| Product | Formulation dose (g/hl) | S content (g/hl) | cu²⁺ content (g/hl) | % affected | | |
|---|---|---|---|---|---|---|
| | | | | Leaf surface | bunches | grapes |
| Untreated | | | | 60 a | 99.38 | 37.69 a |
| Formulation 1 | 500 | 240 | 0 | 2.75 d | 50.48 | 5.08 cd |
| Formulation 3 | 800 | 206 | 0 | 18.75 c | 68.47 | 8.25 c |
| Curenox | 400 | 0 | 160 | 1.25 d | 44.11 | 2.98 cd |

In the tables, "untreated" indicates the vine plants which were not treated in any way; by "formulation dose" there is intended the grams of product per hectolitres of water.

Even the data of table 6 show a surprising activity of formulations 1 and 3, which despite not containing copper have shown an anti-mildew activity which is virtually equivalent to that of Curenox which provides an amount of copper of about 160 g/hl.

### Example 6

This example discloses tests to confirm the anti-mildew activity of formulation 5 against Podosphaera xanthii on courgettes as compared to single components and coformulations (Sulphur - Potassium Bicarbonate amino acid mixture - Ascophillum Nodosum extract).

The tests were performed in DIPROVAL greenhouses of the University of Bologna.

The courgette plants (cultivar Consul) were seeded, two per pot (300 ml volume) on a mixture of peat and perlite. 10-12 day old plants with cotyledonous leaves were used for the inoculation. The topping of the first true leaves was performed so that the cotyledonous leaves could develop. To inoculate the plants the leaves which were already affected were washed with distilled water to remove the conidi from their surfaces. The resulting conidial suspension was filtered with a gauze and the residual conidial concentration (1x10⁶ conidi/ml) was sprayed on the top face of the cotyledonous leaves.

The treatments were performed at three following moments in time: 4, 2, 1 (T4, T2, T1) days before the inoculation of the pathogen.

Each test was repeated 5 times (five pots of two plants each). The results were evaluated at different moments in time (6-7-8-9 days) from inoculation of the pathogen (*Podosphaera xanthii*).

**Table 7**

| **EXPERIMENTAL TESTS** | | | | |
|---|---|---|---|---|
| **PRODUCTS** | **Formulation dose g/hl** | **(g/hl)** | **(g/hl)** | **(g/hl)** |
| | | **S** | **K** | **N** |
| 1) Formulation 5 | 600 | 108 | 43 | 24 |
| 2) A.nodosum extract | 200 | 0.3 | 4 | 0.3 |
| 3) Protifert (amin. mix.) | 175 | 0 | 0 | 24 |
| 4) Untreated | 0 | 0 | 0 | 0 |

**Table 8**

| **PRODUCTS** | **% of affected leaf surface** | | | | | | | | | | | |
|---|---|---|---|---|---|---|---|---|---|---|---|---|
| | **T1** | | | | **T2** | | | | **T4** | | | |
| | **6** | **7** | **8** | **9** | **6** | **7** | **8** | **9** | **6** | **7** | **8** | **9** |
| **1)** | 0.5 | 0.75 | 4 | 5.25 | 2 | 5.75 | 8 | 11 | 3.5 | 11.5 | 11 | 15 |
| **2)** | 5 | 13 | 39.5 | 54.3 | 5 | 20.5 | 52 | 67 | 14 | 26.8 | 60 | 69 |
| **3)** | 3.8 | 9 | 34 | 64 | 4,8 | 11.3 | 37 | 57 | 14 | 31 | 46 | 64 |
| **4)** | 13 | 27.8 | 41 | 62.5 | 13 | 27.8 | 41 | 63 | 13 | 27.8 | 41 | 63 |

From the data in table 7 it is apparent that formulation 5 has a considerable fungicidal activity.

The mixture of amino acids (Protifert) and the *Ascofillum Nodosum* extract have shown a slight activity only with inoculation after one day from treatment (T1); this activity was cancelled in the course of time as shown by the measurement performed 9 days after inoculation.

The activity of formulation 5 remained considerable and constant in the course of time even with inoculation performed after 4 days from treatment.

Table 10 shown below discloses the results obtained by the products and the amounts of table 9 performing the treatment one day before (T1) inoculation with *P.xanthii.*

**Table 9**

| **EXPERIMENTAL TESTS** | | | | |
|---|---|---|---|---|
| **PRODUCTS** | **Formulation dose g/hl** | **(g/hl)** | **(g/hl)** | **(g/hl)** |
| | | **S** | **K** | **N** |
| 1) Formulation 5 | 600 | 108 | 43 | 24 |
| 2) A.nodosum extract | 120 | 0.3 | 4 | 0.3 |
| 3) Protifert (amin. mix.) Amin.) | 111 | 0 | 0 | 24 |
| 4) Potassium bicarbonate | 175 | 0 | 43 | 0 |
| 5) Sulphur 90 | 200 | 108 | 0 | 0 |
| 6) untreated | | | | |

**Table 10**

| **PRODUCTS** | **Measurement of % of affected leaf area** | | | |
|---|---|---|---|---|
| | **6 days** | **7 days** | **8 days** | **9 days** |
| **1)** | 0.0 a | 3.4 a | 9.6 a | 7.5 a |
| **2)** | 10 b | 25.6 b | 41.9 b | 43.7 b |
| **3)** | 12.5 bc | 28.7 b | 52.5 c | 61.2 c |
| **4)** | 20.6 d | 30.0 b | 48.7 c | 67.5 c |
| **5)** | 0.0 a | 2.5 a | 3.7 a | 4.7 a |
| **6)** | 16.5 cd | 33.4 b | 46.3 bc | 72.5 c |

### Example 6

This example discloses comparative tests of the fungicidal activity against late blight (Phytophthora *infestans*) of sulphur-containing formulations in comparison with single components and coformulations: sulphur, potassium bicarbonate and Protifert (mixture of amino acids).

### Materials and methods

The experiments are performed in a greenhouse (temperature of 20-25°C, relative humidity of 60-80%, natural photoperiod) on plants of tomato artificially inoculated with the agent causing late blight. The experimental scheme of "random block" was used by performing 5 repetitions for each test, each consisting of a pot containing a single plant. Tomato plants were used (cv. Marmande) at a stage of 5-6 true leaves.

The test-pathogen used in the tests on the plant was: *Phytophthora infestans* (late blight causing agent).

The tests were arranged so as to verify the anti-late blight activity of the single components in the dosages of formulations 1 and 5 (table 11).

The tests provided a treatment at different times before the inoculation of the pathogen on the epigeal part of the plant (2 days or 2 hours). The products were diluted with water and sprayed manually, uniformly wetting the whole leaf surface.

The inoculation of the pathogen was performed with a manual wash-bottle containing spores of *Phytophthora infestans.*

The spores were taken from previously inoculated leaves and placed in a moist chamber to obtain an abundant sporulation on the day of inoculation.

The measurements in the various tests were performed upon occurrence of the symptoms of the disease on the untreated plants and consisted in the evaluation of the percentage of leaf surface affected by the symptoms of the late blight.

The results of the tests were subjected to analysis of the variance and the averages were compared with the Duncan test (p=0,05).

**Table 11**

| **Test** | **FORMULATION** | **Formulation dose formulato (g/hl)** | **S (g/hl)** | **K (g/hl)** | **N (g/hl)** |
|---|---|---|---|---|---|
| **1** | **untreated** | - | **0** | **0** | **0** |
| 2 | Formulation 5 | 600 g | **108** | **43** | **24** |
| **3** | Sulphur 90 | 120 g | **108** | | |
| 4 | POTASSIUM BICARBONATE | 111 g | | **43** | |
| **5** | **PROTIFERT** | **175 g** | | | **24** |
| 6 | Formulation 1 | 600 g | **240** | **70** | **16.8** |
| 7 | Sulphur 90 | 267 g | **240** | | |
| 8 | POTASSIUM BICARBONATE | 180 g | | **70** | |
| 9 | **PROTIFERT** | 120 g | | | **16.8** |

The results of the different tests which were carried out are shown in the following tables. In particular table 12 shows the results for the tests performed with a treatment two days before inoculation; tables 13 and 14 show the results for tests performed with a treatment two hours before inoculation.

**Table 12**

| **Formulation/tests** | **Formulation dose / hl** | **% of affected leaf surface** |
|---|---|---|
| **1** | - | **100 a** |
| 2 | 600 g | **37.8 b** |
| **3** | 120 g | **100 a** |
| 4 | 111 g | **100 a** |
| **5** | **175 g** | **100 a** |
| 6 | 600 g | **35 b** |
| 7 | 267 g | **100 a** |
| 8 | 180 g | **100 a** |
| 9 | 120 g | **100 a** |

**Table 13**

| **Formulation/tests** | **Formulation dose / hl** | **% of affected leaf surface** |
|---|---|---|
| **1** | - | **90 a** |
| **2** | **600 g** | **2.7 b** |
| **3** | **120 g** | **90 a** |
| **4** | **111 g** | **87.5 a** |
| **5** | **175 g** | **92.5 a** |
| **6** | **600** g | **0.8 b** |
| 7 | **267 g** | **90 a** |
| **8** | **180 g** | **90 a** |
| 9 | 120 g | **92.5 a** |

**Table 14**

| **Formulation/tests** | **Formulation dose / hl** | **% of affected leaf surface** |
|---|---|---|
| **1** | - | **97.5 a** |
| 2 | 800 g | **1.3 b** |
| **3** | 160 g | **97.5 a** |
| 4 | 148 g | **97.5 a** |
| **5** | **233.3 g** | **97.5 a** |
| 6 | 800 g | **0.5 b** |
| 7 | 356 g | **95 a** |
| 8 | 240 g | **97.5 a** |
| 9 | 160 g | **97.5 a** |

Formulations similar to formulation 1 and 5, although not including A. nodosum show similar activities (although a little lower) to those of formulation 1 and 5.

Formulations 1 and 5 have shown a good activity against the agent causing late blight in particular when the inoculation of the pathogen occurs in the hours that follow the drying of the product. The single components of the formulation in the environmental conditions tested, have shown to be totally ineffective even increasing the recommended dose by one third (see table 14).

It should be noted in particular that the effect that is obtained by formulation 1 and 5 (and by the similar formulation cited above) is well above the sum of the single effects of the single components. The above shown tests therefore show that there is a synergical effect among sulphur, potassium and the mixture of amino acids and/or peptides (and possibly A. nodosum).

## Claims

1. A composition for the treatment of plant diseases, comprising from about 10 wt% to about 80 wt%, with respect to the overall weight of the composition, of (elementary) sulphur; from about 3 wt% to 50 wt%, with respect to the overall weight of the composition, of (salified or dissolved) potassium cation; and at least about 10 wt%, with respect to the overall weight of the composition, of a mixture of amino acids and/or peptides (with a chain up to twenty amino acids).

2. The composition according to claim 1, wherein the weight of the potassium cation is at least one fourth of the weight of the sulphur and lower than the weight of the sulphur.

3. The composition according to claim 1 or 2, and comprising about 10 wt% to 55 wt%, with respect to the overall weight of the composition, of (elementary) sulphur; from about 3 wt% to about 16 wt%, with respect to the overall weight of the composition, of potassium cation.

4. The composition according to any of the preceding claims, wherein the sum of the weights of the sulphur and of the potassium cation forms at least 15 wt%, in particular at least 20 wt%, of the composition.

5. The composition according to any of the preceding claims, comprising an extract of *Ascophyllum nodosum.*

6. The composition according to claim 5, comprising at least 3 wt%, with respect to the overall weight of the composition, of the extract of *Ascophyllum nodosum.*

7. The composition according to claim 5 or 6, comprising up to 20 wt%, with respect to the overall weight of the composition, of the extract of *Ascophyllum nodosum.*

8. The composition according to any of the preceding claims, comprising from about 7 wt% to about 42 wt%, with respect to the overall weight of the composition, of the sum of (salified or dissolved) carbonate and bicarbonate anions.

9. The composition according to claim 8, wherein the sum of the weights of the carbonate and bicarbonate anions is at least half the weight of the sulphur and lower than the weight of the sulphur.

10. The composition according to any of the preceding claims, comprising from about 10 wt% to about 75 wt %, with respect to the overall weight of the composition, of the mixture of amino acids and/or peptides, which are chains up to twenty amino acids.

11. Use of a composition according to any of the preceding claims for the care of plants.

12. Use of a composition according to any of the preceding claims for treating a plant disease.

13. Use according to any of claims 11 to 12, wherein the plants are watered by means of the composition or an aqueous solution thereof.
